# EUROPEAN PATENT SPECIFICATION

(11) **EP 2 731 228 B1**
(45) Date of publication and mention of the grant of the patent: **24.02.2016**
(21) Application number: 13191975.5
(22) Date of filing: 07.11.2013
(51) Int. Cl.: H02J 7/02, A43B 3/00, A43B 1/00

(54) **Footwear able to be wirelessly charged**
Drahtlos ladbares Schuhwerk
Chaussure capable d'être chargée sans fil

(30) Priority: 09.11.2012 KR 20120126924
(43) Date of publication of application: 14.05.2014
(73) Proprietor: Hanrim Postech Co., Ltd, Suwon-si (KR)
(72) Inventor: Jung, Chun-Kil, Seoul (KR)
(74) Representative: Zardi, Marco

(56) References cited:
- WO-A2-2012/162140
- CN-U- 201 995 701
- KR-A- 20100 087 442
- KR-A- 20120 045 420
- KR-A- 20130 085 606

## Description

### BACKGROUND

### Field

The present invention relates to a footwear able to be wirelessly charged, capable of providing a clean wear environment through foot odor removal and sterilization without replacing a battery by applying a wireless charging scheme, and a wireless charging device used for the same.

### Description of the Related Art

Generally, a footwear, which is a kind of body protecting means protecting a foot of a walker, always contacts the ground in the state in which it is worn on the foot of a user. Therefore, the footwear absorbs a sweat secreted from the foot, is exposed to an external pollutant as it is, and easily absorbs the external pollutant, such that an inner portion of the footwear becomes always damp. Further, in the inner portion of the footwear, due to an operation of the sweat and the pollutant as described above, various germs may be propagated, odor may be generated, and a disease may be caused in a user's body.

In order to solve these problems, in the footwear according to the related, the most general method of using a footwear insert having an excellent ventilation property or boring a ventilation hole in an outer cover of the footwear and a method of injecting air into the footwear to ventilate the air have been suggested.

In addition, according to the related art, the air was injected into the footwear and was ventilated in the footwear to dilute the odor, thereby slightly solving the problems. However, in this scheme, an effect is small and the problems may not be fundamentally solved.

Meanwhile, in the case in which an electronic component is mounted in the footwear in order to implement a sanitary function, it is required to continuously supply a power. However, since it is difficult to supply the power from an outer portion of the footwear due to characteristics of the footwear, a battery should be mounted in the footwear.

Generally, since the battery has a limitation in a use time, it should be periodically replaced, which is inconvenient in view of maintenance and causes a cost increase. In addition, there is a risk that moisture will be permeated from the outer portion of the footwear through a replacement portion.

A further example of a footwear adapted to be wirelessly charged is known from document KR 2012 0045420.

### SUMMARY

An object of the present invention is to provide a footwear able to be wirelessly charged, capable of removing odor in the footwear and performing sterilization, and being semi-permanently used without replacing a battery, and a wireless charging device used for the same.

According to an embodiment of the present invention, there is provided a footwear as claimed in claim 1, said footwear being able to be wirelessly charged, the footwear including: an insole; an outer cover installed on the insole and having a wear space formed therein; a heel attached to a lower surface of the insole; an ion generator installed in the wear space to apply an ion into the wear space; a battery installed in any one of the insole, the outer cover, and the heel and applying a power to the ion generator; a secondary coil installed in any one of the insole, the outer cover, and the heel and receiving a wireless power signal from an external device; a rectifying module configured to rectify an induced electromotive force generated from the secondary coil; and a controller configured to charge the battery by receiving a power from the rectifying module and control an operation of the ion generator by controlling the battery, along with the further features as claimed in claim 1..

The battery, the secondary coil, the rectifying module and the controller may be installed in the heel, and the heel may further include a shielding plate configured to prevent a magnetic field of the secondary coil from being leaked to the rectifying module or the controller.

The heel and the insole may be waterproofly attached to each other.

The footwear includes a wear detecting sensor installed in any one of the insole and the outer cover to detect whether a user wears the footwear, wherein the controller is configured to control the ion generator based on a signal from the wear detecting sensor.

The wear detecting sensor may be a pressure sensor installed at a portion of an upper surface of the insole, the portion corresponding to the heel, and the controller includes a timer to operate the ion generator at a predetermined period.

The secondary coil may be installed in the heel in a direction vertical or horizontal to the bottom surface of the heel.

The secondary coil may include a first sub coil and a second sub coil installed on the first sub coil so as to be overlapped with the first sub coil.

The footwear may further include: a bio information detecting sensor installed in the wear space to detect a bio information of a user; a memory installed in any one of the insole, the outer cover, and the heel to store the bio information detected by the bio information detecting sensor; and a communication module configured to transmit the bio information stored in the memory to an external electronic device.

According to another exemplary embodiment disclosed in the present application, there is provided a wireless charging device for transmitting a wireless power signal to the footwear as described above, the wireless charging device including: a base part having the footwear hung thereon; and a charging unit installed on the base part and having a primary coil installed in a position thereof corresponding to that of the secondary coil of the footwear. According to still another exemplary embodiment disclosed in the present application, there is provided a wireless charging device for transmitting a wireless power signal to the footwear as described above, the wireless charging device including: a base part having the footwear hung thereon and provided with a recess part into which the heel of the footwear is inserted; and a charging unit installed at the recess part and having a primary coil installed in a position thereof corresponding to that of the secondary coil of the footwear.

### BRIEF DESCRIPTION OF THE DRAWINGS

FIG. 1 is a perspective view showing an example of a footwear able to be wirelessly charged according to an exemplary embodiment of the present invention;
FIG. 2 is a cross-sectional view of the footwear able to be wirelessly charged shown in FIG. 1;
FIG. 3 is a cross-sectional view of a woman's high heel, which is a kind of footwear able to be wirelessly charged according to the exemplary embodiment of the present invention;
FIG. 4 is a view showing an example of a wireless charging device for transmitting a wireless power signal to the footwear able to be wirelessly charged according to the exemplary embodiment of the present invention;
FIG. 5 is a view showing another example of a wireless charging device for transmitting a wireless power signal to the footwear able to be wirelessly charged according to the exemplary embodiment of the present invention; and
FIG. 6 is a block diagram for describing an electronic configuration of the footwear able to be wirelessly charged according to the exemplary embodiment of the present invention.

### DETAILED DESCRIPTION

Hereinafter, a footwear able to be wirelessly charged according to an exemplary embodiment of the present invention and a wireless charging device used for the same will be described in detail with reference to the accompanying drawings.

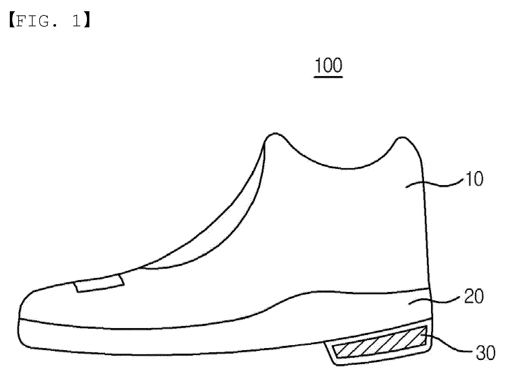

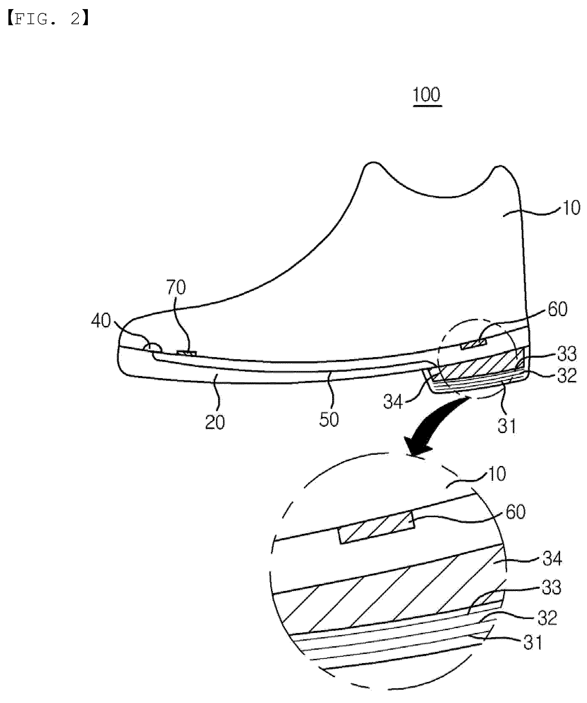

FIG. 1 is a perspective view showing an example of a footwear able to be wirelessly charged according to an exemplary embodiment of the present invention; and FIG. 2 is a cross-sectional view of the footwear able to be wirelessly charged, shown in FIG. 1. As shown in FIGS. 1 and 2, the footwear 100 able to be wirelessly charged according to the exemplary embodiment of the present invention is configured to include an insole 20; an outer cover 10 formed on the insole 20 and having a wear space formed therein; and a heel 30 attached to a rear part of the insole 20. As shown in FIG. 2, an ion generator 40 for removing odor is attached to the insole 20, and a wireless power receiving device and a battery 34 are installed in the heel. Although the ion generator 40 has been installed in the insole in the detailed description of the present invention, the present invention is not limited thereto. That is, it is to be understood that the ion generator 40 may be installed in any receiving space formed by the outer cover 10 and the insole.

In addition, the wireless power receiving device may include a secondary coil configured to receive a power signal from a wireless charging device to be described below and a rectifying module (not shown) configured to rectify an induced electromotive force generated from the secondary coil 31.

In addition, the heel 30 is further provided with the battery 34 charged with a power from the secondary coil 31, a board 33 on which a controller configured to control the wireless power receiving device and the battery 34 to control an operation of the ion generator 40 is installed, and a shielding plate 32 installed on the secondary coil 31 to prevent a leaked magnetic field from affecting the board or the battery 34.

Here, the secondary coil 31 may include a first sub coil and a second sub coil installed on the first sub coil so as to be overlapped with the first sub coil in a longitudinal direction, in order to increase a transmission efficiency. That is, in the case in which a cross-sectional width of the heel is not wide, such that it is difficult to form the secondary coil 31 having a sufficient size, two coils are installed to be overlapped with each other, thereby making it possible to increase a reception efficiency of the wireless power signal.

In addition, a pressure sensor 60 may be attached to a portion corresponding to the heel to control a turn on/off of the ion generator 40. That is, through the pressure sensor 60, an operation of the ion generator 40 may stop when it is judged that a user is in the state in which he/she wears the footwear and start when it is judged that the user is in the state in which he/she takes off the footwear. Alternatively, the controller may operate the ion generator 40 at a predetermined period based on a signal from the pressure sensor 60.

Although the pressure sensor has been used as the detecting sensor detecting whether or not the user wears the footwear in the detailed description of the present invention, the present invention is not limited thereto. That is, it is to be understood that various detecting sensors may be installed in the outer cover or the insole to detect whether or not the user wears the footwear.

Meanwhile, a flexible circuit board 50 may be used in order to connect the board 33 and the ion generator 40 to each other. When a person walks or runs, the insole 20 of the footwear 100 is bent. In this case, when the flexible circuit board 50 is used as an electrical connection means between the ion generator 50 and the board 33, even though the insole 20 is bent, durability is not affected at all.

Although an example in which the battery, the board, and the wireless power receiving device are installed in the heel has been described in the detailed description of the present invention, the present invention is not limited thereto. That is, it is to be understood that the battery, the board, and the wireless power receiving device may also be installed in the insole or the outer cover depending on a use aspect, or the like.

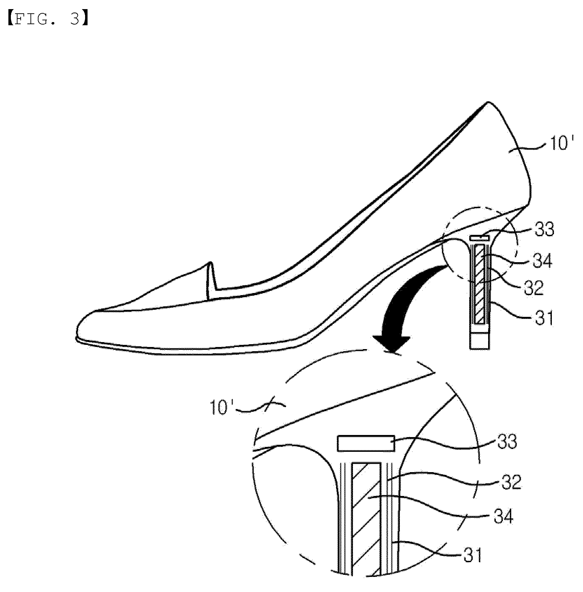

FIG. 3 is a cross-sectional view of a woman's high heel, which is a kind of footwear able to be wirelessly charged according to the exemplary embodiment of the present invention. A description of the some components as the components described with reference to FIGS. 1 and 2 will be omitted for simplification.

In the case of the woman's high heel, although a size of a horizontal cross section is small, a size of a vertical cross section is large. In consideration of this feature, as shown in FIG. 3, the secondary coil 31 is vertically installed at a side of the heel 30 of the woman's high heel. The secondary coil 31 is installed as described above, thereby making it possible to increase a wireless power transmission efficiency.

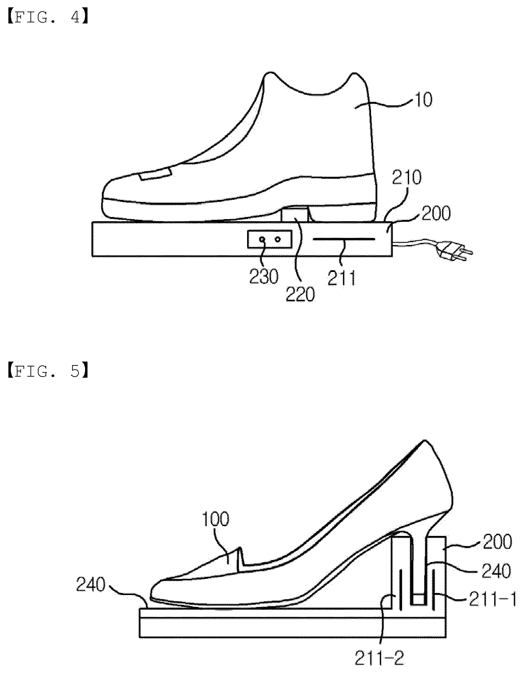

Hereinafter, a wireless charging device for charging the footwear able to be wirelessly charged, having the above-mentioned configuration will be described with reference to FIGS. 4 and 5.

FIG. 4 is a view showing an example of a wireless charging device for transmitting a wireless power signal to the footwear able to be wirelessly charged according to the exemplary embodiment of the present invention. That is, as shown in FIG. 4, in the wireless charging device transmitting a wireless power signal to the footwear able to be wirelessly charged according to the exemplary embodiment of the present invention for removing odor, a portion of a main surface of a base part 200 forms a charging unit 210 and a primary coil 211 is formed under the charging unit 210. In addition, a catching jaw 220 vertically protrudes from one side of the base part 200 so that the heel 30 may be caught, such that the footwear may be stored so as to have a predetermined gradient in the case in which the footwear is stored in a footwear case. Through the above-mentioned configuration, since the primary coil 211 and the secondary coil 31 are closely adhered to each other even in the inclined state, a wireless charging efficiency may be secured.

FIG. 5 is a view showing another example of a wireless charging device for transmitting a wireless power signal to the footwear able to be wirelessly charged according to the exemplary embodiment of the present invention. As shown in FIG. 5, in the case in which the woman's high heel of FIG. 3 is to be charged, since the secondary coil 31, which is the charging unit, is installed at the side, a main surface of the base part 200 is provided with a recess part 240, the recess part 240 is provided with the primary coil, and a support surface 250 capable of supporting a front portion of the footwear is provided. Through the above-mentioned configuration, the secondary coil 31, which is the charging unit, installed at the side, and the primary coil 211 are maintained to be closely adhered to each other, thereby making it possible to maintain a wireless charging efficiency.

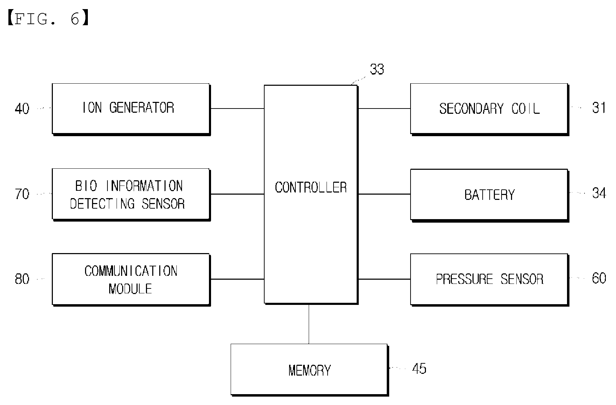

FIG. 6 is a block diagram for describing an electronic configuration of the footwear able to be wirelessly charged according to the exemplary embodiment of the present invention. As shown in FIG. 6, the footwear able to be wirelessly charged according to the exemplary embodiment of the present invention for removing odor may be configured to include the secondary coil 31, the battery 34, the pressure sensor 60, the ion generator 40, a memory 45, a bio information detecting sensor 70, a communication module 80, and a controller 33. A description of the above-mentioned contents in operations of these components will be omitted for simplification.

As shown in FIG. 6, according to the exemplary embodiment of the present invention, the footwear able to be wirelessly charged according to the exemplary embodiment of the present invention further includes the bio information detecting sensor 70 configured to obtain a pulse information, a body temperature information, or the like. The bio information detecting sensor 70 is installed in the receiving space of the footwear to obtain a bio information of the user, and the bio information obtained as described above is stored in the memory 45. The controller 33 transmits the bio information stored in the memory 45 to an external electronic device, for example, a mobile communication terminal of the user, a preset hospital server, or the like, via the communication module 80. The external electronic device obtaining the bio information transmitted as described above checks a health state of the user by using the bio information and informs the user that the health state is not good by using a pre-stored email information or cellular phone information when it is judged that the health state is not good.

According to the exemplary embodiment of the present invention having the above-mentioned configuration, since the battery is charged in a wireless charging scheme, a waterproof function is provided at a low cost, thereby making it possible to increase durability.

In addition, when the footwear is stored, it may start to be conveniently charged and an inner portion of the footwear may be sterilized by the ion generator, thereby making it possible to always provide a dry and soft feeling to the user.

According to the exemplary embodiment of the present invention having the above-mentioned configuration, the ion generator is installed in the wear space of the footwear, such that odor of the wear space is removed and sterilization is performed, thereby making it possible to always provide a clean wear environment to the user.

In addition, since the battery installed in the footwear may be charged in a wireless charging scheme, inconvenience in use due to replacement of the battery may be solved and a maintenance cost may be decreased.

Meanwhile, since the battery needs not to be replaced, it may be installed in the footwear in a completely closed scheme. As a result, the footwear may be easily manufactured and a problem due to water leakage may be prevented.

In the footwear able to be wirelessly charged and the wireless charging device used for the same according to the exemplary embodiment of the present invention as described above, the configurations and the methods of the above-mentioned exemplary embodiments are not restrictively applied. That is, all or some of the respective exemplary embodiments may be selectively combined with each other so that they may be variously modified.

## Claims

1. A footwear (100) able to be wirelessly charged, the footwear (100) comprising:
an insole (20);
an outer cover (10) installed on the insole (20) and having a wear space formed therein;
a heel (30) attached to a lower surface of the insole (20);
an ion generator (40) installed in the wear space to apply an ion into the wear space;
a battery (34) installed in any one of the insole (20), the outer cover (10), and the heel (30) and applying a power to the ion generator (40);
a secondary coil (31) installed in any one of the insole (20), the outer cover (10), and the heel (30) and receiving a wireless power signal from an external device;
a rectifying module configured to rectify an induced electromotive force generated from the secondary coil;
a wear detecting sensor (60) installed in any one of the insole and the outer cover to detect whether a user wears the footwear (100); and
a controller configured to charge the battery (34) by receiving a power from the rectifying module and control an operation of the ion generator (40) by controlling the battery and to control the ion generator (40) based on a signal from the wear detecting sensor (60), the controller including a timer to operate the ion generator (40) at a predetermined period.

2. The footwear (100) of claim 1, wherein the battery (34), the secondary coil (31), the rectifying module and the controller are installed in the heel (30), and the heel further includes a shielding plate (32) configured to prevent a magnetic field of the secondary coil from being leaked to the rectifying module or the controller.

3. The footwear of claim 1, wherein the heel (30) and the insole (20) are waterproofly attached to each other.

4. The footwear of claim 3, wherein the wear detecting sensor is a pressure sensor (60) installed at a portion of an upper surface of the insole (20), the portion corresponding to the heel (30).

5. The footwear of claim 1, wherein the secondary coil (31) is installed in the heel (30) in a direction vertical or horizontal to the bottom surface of the heel (30).

6. The footwear of claim 1, wherein the secondary coil (31) includes a first sub coil and a second sub coil installed on the first sub coil so as to be overlapped with the first sub coil.

7. The footwear of claim 1, further comprising;
a bio information detecting sensor (70) installed in the wear space to detect a bio information of a user;
a memory (45) installed in any one of the insole (20), the outer cover (10), and the heel (30) to store the bio information detected by the bio information detecting sensor (70); and
a communication module configured to transmit the bio information stored in the memory (45) to an external electronic device.

## Patentansprüche

1. Schuhwerk (100), das drahtlos geladen werden kann, wobei das Schuhwerk (100) umfasst:
eine Innensohle (20),
eine Außenabdeckung (10), die an der Innensohle (20) angebracht ist und in der ein Trageraum ausgebildet ist,
einen Absatz (30), der an einer unteren Oberfläche der Innensohle (20) befestigt ist,
einen Ionengenerator (40), der in dem Trageraum angebracht ist, um ein Ion in den Trageraum einzuspeisen,
eine Batterie (34), die in irgendeinem angebracht ist von der Innensohle (20),
der Außenabdeckung (10) und dem Absatz (30) und den Ionengenerator (40) mit Strom versorgt,
eine Sekundärspule (31), die in irgendeinem angebracht ist von der Innensohle (20), der Außenabdeckung (10) und dem Absatz (30) und ein drahtloses Leistungssignal von einer äußeren Vorrichtung erhält,
ein Gleichrichtermodul, das dazu konfiguriert ist, eine induzierte elektromotorische Kraft gleichzurichten, die von der Sekundärspule erzeugt wird,
einen Trageerfassungssensor (60), der in irgendeinem angebracht ist von der Innensohle und der Außenabdeckung, um zu erfassen, ob ein Benutzer das Schuhwerk (100) trägt, und
eine Steuereinrichtung, die dazu konfiguriert ist, die Batterie (34) durch Empfang einer Leistung von dem Gleichrichtermodul zu laden und einen Betrieb des Ionengenerators (40) durch Steuerung der Batterie zu steuern und
den Ionengenerator (40) auf der Basis eines Signals von dem Trageerfassungssensor (60) zu steuern, wobei die Steuereinrichtung einen Zeitgeber zum Betrieb des Ionengenerators (40) zu einem vorherbestimmten Zeitabschnitt umfasst.

2. Schuhwerk (100) nach Anspruch 1, wobei die Batterie (34), die Sekundärspule (31), das Gleichrichtermodul und die Steuereinrichtung in dem Absatz (30) angebracht sind, und der Absatz außerdem eine Abschirmplatte (32) umfasst, die dazu konfiguriert ist zu verhindern, dass ein magnetisches Feld der Sekundärspule zu dem Gleichrichtermodul oder der Steuereinrichtung austritt.

3. Schuhwerk nach Anspruch 1, wobei der Absatz (30) und die Innensohle (20) wasserfest aneinander befestigt sind.

4. Schuhwerk nach Anspruch 3, wobei der Trageerfassungssensor ein Drucksensor (60) ist, der in einem Abschnitt einer oberen Fläche der Innensohle (20) angebracht ist, wobei der Abschnitt dem Absatz (30) entspricht.

5. Schuhwerk nach Anspruch 1, wobei die Sekundärspule (31) in dem Absatz (30) in einer Richtung angebracht ist, die vertikal oder horizontal zu der Bodenfläche des Absatzes (30) verläuft.

6. Schuhwerk nach Anspruch 1, wobei die Sekundärspule (31) eine erste Teilspule und eine zweite Teilspule umfasst, die an der ersten Teilspule so angebracht ist, dass sie durch die erste Teilspule überlappt wird.

7. Schuhwerk nach Anspruch 1, außerdem umfassend
einen Bioinformationserfassungssensor (70), der in dem Trageraum angebracht ist, um eine Bioinformation eines Benutzers zu erfassen,
einen Speicher (45), der in irgendeinem angebracht ist von der Innensohle (20), der Außenabdeckung (10) und dem Absatz (30), um die Bioinformationen zu speichern, die durch den Bioinformationserfassungssensor (70) erfasst wurden, und
ein Kommunikationsmodul, das dazu konfiguriert ist, die in dem Speicher (45) gespeicherten Bioinformationen an eine äußere elektronische Vorrichtung zu übertragen.

## Revendications

1. Chaussure (100) pouvant être chargée sans fil, la chaussure comprenant :
une semelle intérieure (20) ;
une enveloppe extérieure (10) installée sur la semelle intérieure et ayant un espace d'utilisation formé à l'intérieur ;
un talon (30) fixé à une surface inférieure de la semelle intérieure (20) ;
un générateur d'ions (40) installé dans l'espace d'utilisation pour appliquer un ion dans l'espace d'utilisation ;
une batterie (34) installée dans l'une quelconque de la semelle intérieure (20), de l'enveloppe extérieure (10), et du talon (30) et appliquant une énergie au générateur d'ions (40) ;
une bobine secondaire (31) installée dans l'une quelconque de la semelle intérieure (20), de l'enveloppe extérieure (10), et du talon (30) et recevant un signal de puissance sans fil en provenance d'un dispositif externe ;
un module de redressement configuré pour redresser une force électromotrice induite générée à partir de la bobine secondaire ;
un capteur de détection d'utilisation (60) installé dans l'une quelconque de la semelle intérieure (20) et de l'enveloppe extérieure pour détecter si un utilisateur porte la chaussure (100) ; et
un contrôleur configuré pour charger la batterie (34) en recevant de l'énergie en provenance du module de redressement et commander un fonctionnement du générateur d'ions (40) en commandant la batterie et pour commander le générateur d'ions (40) sur la base d'un signal en provenance du capteur de détection d'utilisation (60), le contrôleur comprenant une minuterie pour actionner le générateur d'ions (40) selon une période prédéterminée.

2. Chaussure (100) selon la revendication 1, dans laquelle la batterie (34), la bobine secondaire (31), la module de redressement et le contrôleur sont installés dans le talon (30), et le talon comprend en outre une plaque de blindage (32) configurée pour empêcher un champ magnétique de la bobine secondaire de s'introduire dans le module de redressement ou le contrôleur.

3. Chaussure selon la revendication 1, dans laquelle le talon (30) et la semelle intérieure (20) sont l'un à l'autre de manière étanche.

4. Chaussure selon la revendication 3, dans laquelle le capteur de détection d'utilisation est un capteur de pression (60) installé au niveau d'une partie d'une surface supérieure de la semelle intérieure (20), la partie correspondant au talon (30).

5. Chaussure selon la revendication 1, dans laquelle la bobine secondaire (31) est installée dans le talon (30) dans une direction verticale ou horizontale sur la surface inférieure du talon (30).

6. Chaussure selon la revendication 1, dans laquelle la bobine secondaire (31) comprend une première sous bobine et une seconde sous bobine installée sur la première sous bobine de manière à être recouverte par la première sous bobine.

7. Chaussure selon la revendication 1, comprenant en outre :
un capteur de détection d'informations biologiques (70) installé dans l'espace d'utilisation pour détecter une information biologique d'un utilisateur ;
une mémoire (45) installée dans l'une quelconque de la semelle intérieure (20), de l'enveloppe extérieure (10), et du talon (30) pour stocker les informations biologiques détectées par le capteur de détection d'informations biologiques (70) ;
un module de communication configuré pour transmettre les informations biologiques stockées dans la mémoire (45) à un dispositif électronique externe.
